# EUROPÄISCHE PATENTSCHRIFT

(11) **EP 2 832 965 B1**
(45) Veröffentlichungstag und Bekanntmachung des Hinweises auf die Patenterteilung: **21.02.2018**
(21) Anmeldenummer: 14001826.8
(22) Anmeldetag: 24.05.2014
(51) Int. Cl.: F01N 3/20, F01N 11/00, F01N 3/10

(54) **Verfahren und Vorrichtung zur Ermittlung des Wirkungsgrades einer Abgasreinigungsvorrichtung**
Method and device for determining the efficiency of an exhaust gas purifying device
Procédé et dispositif de détermination du rendement d'un dispositif de nettoyage des gaz d'échappement

(30) Priorität: 30.07.2013 DE 102013012575
(43) Veröffentlichungstag der Anmeldung: 04.02.2015
(73) Patentinhaber: MAN Truck & Bus AG, 80995 München (DE)
(72) Erfinder: Pfaffinger, Andreas, 92318 Neumarkt (DE)
(74) Vertreter: Liebl, Thomas

(56) Entgegenhaltungen:
- WO-A1-2010/097292
- DE-A1-102011 101 174
- US-A1- 2009 266 058
- US-A1- 2009 293 451

## Beschreibung

Die vorliegende Erfindung betrifft ein Verfahren zur Ermittlung des Wirkungsgrades einer Abgasreinigungseinrichtung einer Brennkraftmaschine, insbesondere einer Diesel-Brennkraftmaschine, insbesondere für Kraftfahrzeuge, nach dem Oberbegriff des Patentanspruchs 1 sowie eine Vorrichtung zur Ermittlung des Wirkungsgrades einer Abgasreinigungseinrichtung einer Brennkraftmaschine, insbesondere einer Diesel-Brennkraftmaschine, insbesondere für Kraftfahrzeuge, nach dem Oberbegriff des Patentanspruchs 11.

Gattungsgemäße Abgasreinigungseinrichtungen für Diesel-Brennkraftmaschinen, insbesondere in Kraftfahrzeugen, verwenden zur Systemsteuerung und -überwachung zwei NOx-Sensoren, von denen der eine stromauf des Oxidationskatalysators und der zweite stromab des Reduktionskatalysators angeordnet ist und deren Signalwerte auf die NO-, NO2- und NH3-Konzentrationen im Abgas schließen lassen.

Es ist bekannt, dass die Konvertierungsrate von Oxidationskatalysatoren und/oder von Partikelfiltern durch Alterung oder gegebenenfalls durch Verschwefelung (bei ungeeigneten Kraftstoffen) abnehmen kann, wobei eine Überwachung dieser Abnahme zur Bestimmung von einem Teileersatz oder zur Adaption von Steuergerätekennwerten, -linien, bzw. -feldern eines elektronischen Motorsteuergerätes vorteilhaft wäre.

Durch die DE 10 2011 101 174 A1 ist es bekannt, stromauf eines Oxidationskatalysators einen ersten NOx-Sensor, stromab eines dem Oxidationskatalysator nachgeschalteten Partikelfilter einen zweiten NOx-Sensor und stromab eines dem Partikelfilter nachgeschalteten SCR-Katalysators einen dritten NOx-Sensor anzuordnen. Der erste und zweite NOx-Sensor, die jeweils stromauf des SCR-Katalysators angeordnet sind, weist eine NO2-Querempfindlichkeit auf, um unbeeinträchtigt von der stromab erfolgenden Reduktionsmittelzufuhr die NO/NO2-Konzentration im Abgas zu bestimmen. Durch Vergleich der Signalwerte der beiden NOx-Sensoren in einem elektronischen Steuergerät kann auf eine verminderte Konvertierungsrate des Oxidationskatalysators und/oder des Partikelfilters geschlossen und gegebenenfalls ein Fehlersignal generiert werden. Der dritte NOx-Sensor, der stromab des SCR-Katalysators angeordnet ist, soll dagegen lediglich eine NH3-Querempfindlichkeit aufweisen, um einen Reduktionsmitteldurchbruch erfassen zu können. Der Bauteilaufwand ist hier ebenso wie der Auswerteaufwand relativ hoch.

Die WO 2010/097292 A1 beschreibt ein weiteres Verfahren zur Einschätzung der Effektivität eines Oxidationskatalysators, das ohne Messsonden bzw. NOx-Sensoren am Oxidationskatalysator auskommt und dazu mittels eines Temperatursensors die Effektivität bzw. das Temperaturspektrum des Reduktionskatalysators erfasst und in einem Kennlinienspeicher auswertet. Das Temperaturspektrum im SCR Katalysator kann sich zum Beispiel mit abnehmender Konvertierungsrate des Oxidationskatalysators nach oben verschieben.

Die US 2009/0266058 A1 beschreibt eine Abgasreinigungsvorrichtung mit jeweils einem stromauf und stromab eines SCR Katalysators angeordneten NOx-Sensor. Ferner ist eine Reduktionsmittel-Einspritzdüse stromauf des SCR Katalysators vorgesehen. Eine mit den Sensoren verbundene Motorsteuerung ist in der Lage eine Stickoxidgeneration des Verbrennungsmotors und damit einhergehend eine benötigte Menge an einzuspritzendem Reduktionsmittel zu bestimmen.

Aufgabe der Erfindung ist es, ein Verfahren und eine Vorrichtung zur Ermittlung des Wirkungsgrades einer Abgasreinigungseinrichtung einer Brennkraftmaschine, insbesondere einer Diesel-Brennkraftmaschine, insbesondere für Kraftfahrzeuge, zu schaffen, mittels dem bzw. mittels der eine bauteiltechnisch wenig aufwendige, jedoch dennoch zuverlässige und funktionssichere Wirkungsgradbestimmung, insbesondere für einen Oxidationskatalysator und/oder einen Partikelfilter und/oder für einen einem Reduktionskatalysator nachgeschalteten Ammoniak-Sperrkatalysator durchführbar ist.

Die Lösung dieser Aufgabe gelingt mit den Merkmalen der unabhängigen Patentansprüche. Vorteilhafte Weiterbildungen der Erfindung sind Gegenstand der jeweiligen Unteransprüche.

Gemäß Anspruch 1 wird ein Verfahren zur Ermittlung des Wirkungsgrades einer Abgasreinigungseinrichtung einer Brennkraftmaschine, insbesondere einer Diesel-Brennkraftmaschine, insbesondere für Kraftfahrzeuge, vorgeschlagen, mit einem ersten, einem Oxidationskatalysator und/oder einem Partikelfilter vorgeschalteten NOx-Sensor und einem zweiten, stromab eines Reduktionskatalysators angeordneten NOx-Sensor, sowie mit einer Einrichtung zum dosierten Zuführen eines Reduktionsmittels, insbesondere einer wässrigen Harnstofflösung, aufweist, wobei die Signale der beiden NOx-Sensoren einem elektronischen Steuergerät zugeführt werden, mittels dem zumindest eine Zuführmenge des Reduktionsmittels vorgegeben wird. Erfindungsgemäß ist vorgesehen, dass - zur Bestimmung eines Wirkungsgrades, insbesondere eines NO2-Bildungswirkungsgrades, von wenigstens dem Oxidationskatalysators und/oder wenigstens dem Partikelfilter - von dem Steuergerät lediglich anhand der von den beiden NOx-Sensoren erfassten Signalwerte, bei denen es sich um NOx-Signalwerte handelt, die NO- und die NO2-Konzentration und/oder das NO2/NO-Verhältnis des Abgasstroms an der Messposition bzw. im Bereich der Messposition des zweiten NOx-Sensors ermittelt wird, wobei die NO2-Querempfindlichkeit des zweiten NOx-Sensors zur Wirkungsgradbestimmung genutzt wird. Für den bevorzugten Fall, dass dem Reduktionskatalysator ein Ammoniak-Sperrkatalysator nachgeschaltet ist, wird bzw. werden von dem Steuergerät lediglich anhand der von den beiden NOx-Sensoren erfassten Signalwerte, bei denen es sich insbesondere um NOx-Signalwerte handelt, die NO- und NO2-Konzentration bzw. zumindest das NO2/NO-Verhältnis des Abgasstroms im Messbereich des zweiten NOx-Sensors und/oder stromab des Ammoniak-Sperrkatalysators ermittelt. Die so ermittelten Werte werden dabei zur Bestimmung des Wirkungsgrades, insbesondere des NO2-Bildungswirkungsgrades, des Oxidationskatalysators und/oder des Partikelfilters und/oder des Ammoniak-Sperrkatalysators bevorzugt miteinander und/oder mit vorgegebenen Sollwerten verglichen.

Mit einer derartigen Lösung wird somit der ohnehin vorhandene zweite NOx-Sensor bzw. dessen NO2-Querempfindlichkeit in einer Doppelfunktion zur Wirkungsgradbestimmung nutzbar, was den baulichen Aufwand wesentlich reduziert. Ein wesentlicher Unterschied zum Gegenstand der eingangs genannten DE 10 2011 101 174 A1 besteht somit darin, keinen dritten NOx-Sensor und den damit verbundenen Steuerungs- und Auswertungsaufwand zu verwenden. Dies ermöglicht somit auf einfache und funktionssichere Weise, ohne baulichen Mehraufwand die Signalwerte der beiden NOx-Sensoren in dem elektronischen Steuergerät zu erfassen und auf deren NO- undNO2 Konzentration bzw. deren NO/NO2-Verhältnis hin auszuwerten, um somit auf den Wirkungsgrad des Oxidationskatalysator und/oder des Partikelfilters und/oder des Ammoniak-Sperrkatalysators zu schließen.

Bevorzugt liefert hier dann der Signalwert des ersten NOx-Sensors den "korrekten" bzw. gegenüber dem NOx-Signalwert des zweiten NOx-Sensors weniger von NO2 bzw. NH3 beeinflussten NOx-Signalwert. Dieser vom ersten NOx-Sensor erfasste erste NOx-Signalwert dient dann, unter weiterer Herbeiziehung des vom zweiten NOx-Sensor erfassten zweiten NOx-Signalwertes, im Steuergerät als Basis für die Berechnung der NO- und NO2-Konzentration bzw. des NO/NO2-Verhältnisses des Abgasstroms im Bereich des zweiten NOx-Sensors bzw. stromab des Reduktionskatalysators oder stromab des Ammoniak-Sperrkatalysators. Diese Werte können dann zum Beispiel, wie vorstehend bereits beschrieben, mit gespeicherten Solllwerten verglichen werden.

Gemäß einer besonders bevorzugten Ausgestaltung ist vorgesehen, dass zu definierten Zeitpunkten und/oder bei definierten Betriebszuständen der Brennkraftmaschine und/oder der Abgasreinigungseinrichtung, in denen jeweils eine Wirkungsgraderfassung (Diagnose) erfolgen soll, die Reduktionsmittelzufuhr, insbesondere die Zufuhr einer an sich für den aktuellen Betriebszustand erforderlichen Zudosiermenge an Reduktionsmittel, für eine vorgegebene Zeitdauer, insbesondere für den Zeitraum der Wirkungsgraderfassung, zumindest reduziert wird, insbesondere vollkommen eingestellt wird, und/oder ein Reduktionsmittel-Speicher des Reduktionskatalysators, insbesondere ein Ammoniak-Speicher eines SCR-Katalysators als Reduktionskatalysator, entleert ist. Dadurch lässt sich die Beeinflussung der Wirkungsgradbestimmung für den Oxidationskatalysator und/oder den Partikelfilter und/oder einen Ammoniak-Sperrkatalysator durch die NOx-Umsetzung im Reduktionskatalysator vorteilhaft ausschalten.

Das heißt mit anderen Worten, dass mit der bevorzugten erfindungsgemäßen Lösung anhand der beiden NOx-Sensorsignalwerte die NO- und NO2-Konzentration oder zumindest das NO/NO2-Verhältnis im Abgasstrom nach dem wenigstens einen Reduktionskatalysator oder nach dem wenigstens einen Ammoniak-Sperrkatalysator bzw. im Bereich der Messposition des zweiten NOx-Sensors im Steuergerät berechnet wird. Voraussetzung für besonders aussagekräftige Ergebnisse ist hierfür insbesondere, bedingt durch die Verwendung von lediglich zwei Sensoren, dass für den Zeitraum der Diagnose keine NOx-Reduktion am Reduktionskatalysator bzw. SCR-Katalysator stattfindet. Demnach sollte für die Diagnose die Reduktionsmittelzudosierung temporär ausgeschaltet und der Reduktionsmittelspeicher des Reduktionskatalysators, insbesondere ein Ammoniak-Speicher eines SCR-Katalysators, entleert sein.

An dieser Stelle sei zudem erwähnt, dass für den Fall, dass ein NO/NO2-Verhältnis ermittelt werden sollte, selbstverständlich anstelle des NO/NO2-Verhältnisses auch das NO2/NO-Verhältnis ermittelt werden kann.

Eine Auswertung der Signalwerte der beiden NOx-Sensoren kann besonders bevorzugt bei einem stationären Betrieb der Brennkraftmaschine, insbesondere bei einer Standregeneration und/oder bei Serviceintervallen, durchgeführt werden. Die Überprüfung kann dabei zum Beispiel vor und nach einer Standregenation und/oder nach einem ausreichenden Zeitintervall erfolgen; letzteres um sicherzustellen, dass der Reduktionsmittel- bzw. NH3-Speicher im Reduktionskatalysator bzw. SCR-Katalysator leergefahren und eine Signalverfälschung ausgeschlossen ist.

In einer vorteilhaften Ausführung der Erfindung können die Ist-Signalwerte der beiden NOx-Sensoren und/oder die auf Basis der Ist-Signalwerte der beiden NOx-Sensoren ermittelten NO- und NO2-Konzentrationen bzw. NO/NO2-Verhältnisse im Neuzustand der Abgasreinigungseinrichtung in dem elektronischen Steuergerät als Sollwerte abgespeichert und mit den jeweils erfassten und/oder ermittelten Istwerten im Betrieb der Brennkraftmaschine verglichen werden, wobei bei definierten Abweichungen der Istwerte von den gespeicherten Sollwerten Lernwerte adaptiert und/oder ein Hinweis- oder Fehlersignal generiert wird.

Alternativ dazu können die Soll-Signalwerte der beiden NOx-Sensoren in dem elektronischen Steuergerät als Kennfeld abgelegt werden. Diese Ausführung eignet sich insbesondere, wenn eine in Intervallen erfolgende Überprüfung der Abgasreinigungseinrichtung bei instationären bzw. transienten Motorbetrieb im Kraftfahrzeug zugelassen sein sollte.

Die Sollwerte der beiden NOx-Sensoren können des Weiteren rechnerisch ermittelt werden, insbesondere wenn die genauen Spezifikationen der NOx-Sensoren bekannt sind und deren Querempfindlichkeit auf NO2 gegebenenfalls durch Messungen in definierten Betriebszuständen bzw. Abgaskonzentrationen entsprechend eingegrenzt sind.

Ferner kann in vorteilhafter Weise der Grad der Abweichung der Ist-Signalwerte von den Sollwerten erfasst und zur Charakterisierung des Alterungsgrades und/oder des Verschwefelungsgrades des Oxidationskatalysators und/oder des Partikelfilters und/oder des Ammoniak-Sperrkatalysators herangezogen werden. Daraus resultiert eine weitere Verfeinerung der Signalauswertung mit dem Vorteil, dass gegebenenfalls Ursachen für die abnehmende Konvertierungsrate des Oxidationskatalysators und/oder des Partikelfilters und/oder des Ammoniak-Sperrkatalysators abgeleitet werden können.

Die erfindungsgemäße Vorrichtung zeichnet sich dadurch aus, dass das Steuergerät eine Auswerteeinrichtung umfasst, mittels der lediglich auf der Basis der als NOx-Signalwerte ausgebildeten Ist-Signalwerte der beiden NOx-Sensoren die NO- und NO2-Konzentration und/oder das NO/NO2-Verhältnis des Abgasstroms im Bereich des zweiten NOx-Sensors ermittelbar sind und die so ermittelten NO- und NO2-Konzentrationen und/oder das so ermittelte NO/NO2-Verhältnis zur Bestimmung eines Wirkungsgrades des Oxidationskatalysators und/oder des Partikelfilters mit vorgegebenen Sollwerten vergleichbar sind, wobei die NO2-Querempfindlichkeit des zweiten NOx-Sensors zur Wirkungsgradbestimmung nutzbar ist. Die sich dadurch ergebenden Vorteile wurden bereits zuvor ausführlich erläutert.

Besonders vorteilhaft ist (auch in Verbindung mit der erfindungsgemäßen Verfahrensführung) der Einsatz von NOx-Sensoren als ersten und zweiten NOx-Sensoren, die eine NO2-Querempfindlichkeit aufweisen, die signifikant unterschiedlich zur NO-Querempfindlichkeit ist, insbesondere wenigstens 90% beträgt, bevorzugt in etwa zwischen 75 bis 90% beträgt. Das bedeutet, dass sich das mit dem NOx-Signal erfasste Messsignal bei Nichtanwesenheit von NH3, zum Beispiel im Falle einer im bzw. vom Motorsteuergerät angenommenen bevorzugten NO2-Querempfindlichkeit von 80%, wie folgt zusammensetzt: NOx_Sens = NO + 0,8 NO2

Schließlich wird ein Kraftfahrzeug, insbesondere ein Nutzkraftfahrzeug mit einer Diesel-Brennkraftmaschine, einer Abgasreinigungseinrichtung und einem elektronischen Steuergerät gemäß vorstehenden Ausführungen vorgeschlagen.

Ein Ausführungsbeispiel der Erfindung ist im Folgenden anhand des beigefügten Blockschaltbilds näher beschrieben, welches eine Brennkraftmaschine mit einer Abgasreinigungseinrichtung und zwei mit einem elektronischen Steuergerät verbundene NOx-Sensoren zeigt.

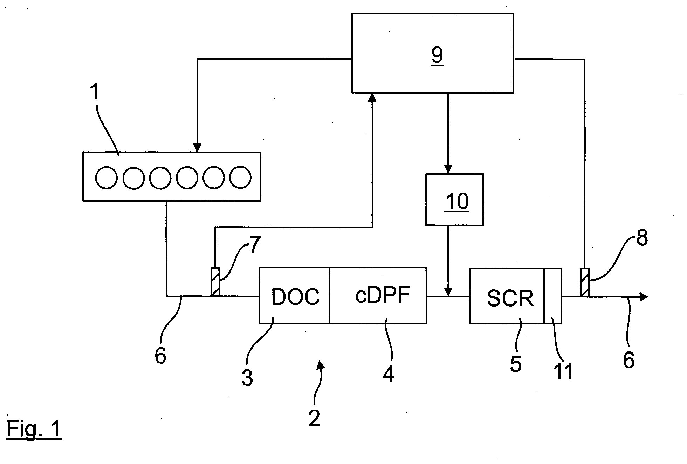

Die einzige Figur zeigt in vereinfachter Darstellung eine Diesel-Brennkraftmaschine 1 für ein Nutzkraftfahrzeug, mit einem Abgassystem 2, in dem als Abgasreinigungseinrichtung in Strömungsrichtung des Abgases ein Oxidationskatalysator 3 (DOC), ein Dieselpartikelfilter 4 (cDPF) und ein Reduktionskatalysator 5 (SCR) sowie gegebenenfalls ein dem Reduktionskatalysator 5 nachgeschalteter Ammoniak-Sperrkatalysator 11 vorgesehen sind. Sowohl im Oxidationskatalysator 3 als auch im Dieselpartikelfilter 4 als auch im Reduktionskatalysator 5 wird jeweils NO zu NO2 oxidiert.

Stromauf des Oxidationskatalysators 3 ist ein NOx-Sensor 7 und stromab des Reduktionskatalysators 5 bzw. Ammoniak-Sperrkatalysators 11 ein NOx-Sensor 8 in die Abgasleitung 6 eingesetzt, mittels denen vor allem die Konzentration von NO im Abgas gemessen werden soll und die im vorliegenden Fall jeweils beide eine definierte bzw. bestimmte NO2-Querempfindlichkeit aufweisen, so dass mittels den NOx-Sensoren 7, 8 im Abgasstrom die Abgaskonzentrationen von NO und NO2 erfasst und als Signalwerte einem elektronischen Motorsteuergerät 9 zugeführt werden können..

Über das Steuergerät 9 wird zudem eine Dosiereinrichtung 10 gesteuert, mit der dem Abgas stromauf des Reduktionskatalysators 5 Reduktionsmittel, zum Beispiel in Form einer wässrigen Harnstofflösung, zudosiert wird.

Der stromauf des Oxidationskatalysators 3 positionierte NOx-Sensor 7 erfasst die Rohemission der Diesel-Brennkraftmaschine, die systembedingt (Luftüberschuss) eine hohe NO-Konzentration und wenig NO2 aufweist.

Die NO-Konzentration wird im Oxidationskatalysator 3 und im Partikelfilter 4 sowie im gegebenenfalls vorhandenen Ammoniak-Sperrkatalysator 11 aufoxidiert, wobei folgende Reaktion stattfindet:

2NO + O2 → 2NO2

Der zweite NOx-Sensor 8 erfasst die Reinemission nach Zusetzen des Reduktionsmittels und dessen Thermolyse bzw. Hydrolyse im heißen Abgas zu NH3 mit entsprechender Reduktion des NOx im Reduktionskatalysator 5.

Abweichend zur soweit beschriebenen Konvertierung der Abgasbestandteile ist das Steuergerät 9 derart parametriert, dass zur Steuerung der Diagnose der oxidierenden Abgasreinigungseinrichtungen bzw. des Oxidationskatalysators 3 und des Partikelfilters 4 als erster Schritt die Zuführmenge an Reduktionsmittel durch die Dosiereinrichtung 10 gezielt vermindert, bevorzugt jedoch gänzlich unterbrochen wird.

Nach der Unterbrechung der Reduktionsmittelzufuhr werden nach Verstreichen einer definiert vorgegebenen, insbesondere geringen Zeitdauer, während der der NH3-Speichers bzw. der Reduktionskatalysators 5 entleert bzw. leergefahren wird, die Ist-Signalwerte der beiden NOx-Sensoren 7, 8 erfasst und einer Auswerteeinrichtung des Steuergerätes 9 zugeführt, wobei der Signalwert des ersten NOx-Sensors 7 den "korrekten" NOx-Wert liefert, da er am wenigstens durch NO2 bzw. NH3 beeinflusst ist. Dieser vom ersten NOx-Sensor 7 erfasste erste NOx-Signalwert dient dann, unter weiterer Herbeiziehung des vom zweiten NOx-Sensor 8 erfassten zweiten NOx-Signalwertes, im Steuergerät 9 als Basis für die Berechnung der NO- und NO2-Konzentrationen bzw. des NO/NO2-Verhältnisses des Abgasstroms im Bereich des zweiten NOx-Sensors 8 bzw. stromab des Reduktionskatalysators 5 oder stromab des Ammoniak-Sperrkatalysators 11. Diese Werte können dann zum Beispiel mit gespeicherten Solllwerten verglichen werden. Beispielsweise kann hier eine Differenzbildung der ermittelten Werte erfolgen und der Wert der Differenz mit einem vorgegebenen Sollwert verglichen werden. Alternativ können auch die jeweils ermittelten Istwerte mit Sollwerten verglichen werden und dann auf der Basis der einzelnen Abweichungen oder auf der Basis der miteinander in eine Beziehung gebrachten Abweichungen auf eine relevante oder nicht relevante Abweichung von einem (gegebenenfalls weiteren) Sollwert geschlossen werden. Die Möglichkeiten der Auswertung sind hier zahlreich und dem Fachmann an sich bekannt. Bei einer festgestellten definierten Abweichung des oder der ermittelten Istwerte von wenigstens einem Solllwert kann dann ein auslesbarer Fehlerspeicher gesetzt und/oder ein Hinweis- bzw. Fehlersignal generiert werden und/oder können Lernwerte adaptiert werden.

Durch die Unterbrechung der Zufuhr des Reduktionsmittels zum Reduktionskatalysator 5 findet in diesem keine Reduktion der NOx-Konzentration im Abgas statt. Demzufolge kann durch Vergleich der Ist-Signalwerte der beiden NOx-Sensoren 7, 8 mit im Steuergerät 9 abgelegten Soll-Signalwerten vorteilhaft bestimmt werden, ob der Wirkungsgrad des Oxidationskatalysators 3 und des Partikelfilters 4 bzw. gegebenenfalls des Ammoniak-Sperrkatalysators 11 noch der geforderten Norm entspricht oder gegebenenfalls durch Alterung oder Verschwefelung unzulässig nachgelassen hat und gegebenenfalls einen Teileersatz erfordert.

Die Diagnose kann bevorzugt stationär bei Servicearbeiten am Nutzkraftfahrzeug und/oder bei bzw. nach einer Standregeneration des Oxidationskatalysators 3 bzw. des Partikelfilters 4 bzw. des Ammoniak-Sperrkatalysators 11 nach vorgegebenen Zeitintervallen oder Kilometerleistungen durchgeführt werden.

Es ist auch denkbar, die Diagnose mehrfach, zum Beispiel vor und nach einer Standregeneration, durchzuführen. Insbesondere vor der Standregeneration ist der NH3-Speicher zu leeren.

Die Soll-Signalwerte der NOx-Sensoren 7, 8 können empirisch durch Messungen im Neuzustand ermittelt und im Steuergerät 9 abgelegt sein und dann mit den Ist-Signalwerten entsprechend verglichen werden.

Alternativ kann auch ein Korrekturwert für den NO2-Anteil im Abgas zu den Signalwerten der NOx-Sensoren 7, 8 ermittelt werden, der dann eine Berechnung des NO2-Anteils ermöglicht und damit auf den Wirkungsgrad des Oxidationskatalysators 3 und/oder des Partikelfilters 4 und/oder des Ammoniak-Sperrkatalysators 11 schließen lässt.

Des Weiteren können in einem Kennfeldspeicher des Steuergeräts 9 abhängig vom Betriebszustand der Brennkraftmaschine 1 und weiteren Parametern Soll-Signalwerte abgelegt sein, die entsprechend insbesondere bei Servicearbeiten oder gegebenenfalls im instationären bzw. transienten Betrieb der Brennkraftmaschine 1 bzw. des Kraftfahrzeugs in definierten Intervallen mit den Ist-Signalwerten der NOx-Sensoren 7, 8 verglichen werden.

Schließlich kann bei den Ist-Signalwerten der beiden NOx-Sensoren 7, 8 durch vorangegangene, gegebenenfalls empirische Signalauswertungen und deren Charakterisierung gegebenenfalls auf eine Alterung oder auf eine Verschwefelung des Oxidationskatalysators 3 und/oder des Partikelfilters 4 und/oder eines evt. vorhandenen Ammoniak-Sperrkatalysators 11 durch entsprechende Signaldifferenzierung geschlossen werden.

Durch die beschriebene Modifizierung des Steuergerätes 9 ist es ohne baulichen Mehraufwand möglich, den Wirkungsgrad des Oxidationskatalysators 3 und des Dieselpartikelfilters 4 bzw. eines evt. vorhandenen Ammoniak-Sperrkatalysators 11 der Abgasreinigungseinrichtung funktionssicher zu überwachen.

### BEZUGSZEICHENLISTE

1 Brennkraftmaschine
2 Abgassystem
3 Oxidationskatalysator
4 Dieselpartikelfilter
5 Reduktionskatalysator
6 Abgasleitung
7 NOx-Sensor
8 NOx-Sensor
9 Steuergerät
10 Dosiereinrichtung
11 Ammoniak-Sperrkatalysator

## Patentansprüche

1. Verfahren zur Ermittlung des Wirkungsgrades einer Abgasreinigungseinrichtung (2) einer Brennkraftmaschine, insbesondere einer Diesel-Brennkraftmaschine (1), mit einem ersten, einem Oxidationskatalysator (3) und/oder einem Partikelfilter (4) vorgeschaltetem NOx-Sensor (7) und einem zweiten, stromab eines Reduktionskatalysators (5) angeordneten NOx-Sensor (8), sowie mit einer Einrichtung (10) zum dosierten Zuführen eines Reduktionsmittels, wobei die Signale der beiden NOx-Sensoren (7, 8) einem Steuergerät (9) zugeführt werden, mittels dem zumindest eine Zuführmenge des Reduktionsmittels vorgegeben wird, **dadurch gekennzeichnet,**
**dass** zur Bestimmung eines Wirkungsgrades des Oxidationskatalysators (3) und/oder des Partikelfilters (4) von dem Steuergerät (9) lediglich anhand der von den beiden NOx-Sensoren (7, 8) erfassten NOx-Signalwerte die NO- und NO2-Konzentration und/oder das NO2/NO-Verhältnis des Abgasstroms an der Messposition des zweiten NOx-Sensors (8) ermittelt werden, wobei die NO2-Querempfindlichkeit des zweiten NOx-Sensors (8) zur Wirkungsgradbestimmung genutzt wird.

2. Verfahren nach Anspruch 1, **dadurch gekennzeichnet, dass** dem Reduktionskatalysator (5) ein Ammoniak-Sperrkatalysator (11) nachgeschaltet ist, so dass zur Bestimmung des Wirkungsgrades, insbesondere des NO2-Bildungswirkungsgrades, von dem Steuergerät (9) lediglich anhand der von den beiden NOx-Sensoren (7, 8) erfassten Signalwerte die NO- und NO2-Konzentration und/oder das NO2/NO-Verhältnis des Abgasstroms im Messbereich des zweiten NOx-Sensors (7) und/oder stromab des Ammoniak-Sperrkatalysators (11) ermittelt wird.

3. Verfahren nach Anspruch 1 oder 2, **dadurch gekennzeichnet, dass** der Signalwert des ersten NOx-Sensors (7) einen ersten NOx-Signalwert liefert, der unter weiterer Heranziehung des vom zweiten NOx-Sensor (8) erfassten zweiten NOx-Signalwertes im Steuergerät (9) als Basis für die Berechnung der NO- und NO2-Konzentration und/oder des NO/NO2-Verhältnisses des Abgasstroms im Bereich des zweiten NOx-Sensors (8) und/oder stromab des Reduktionskatalysators (5) und/oder stromab eines Ammoniak-Sperrkatalysators (11) dient.

4. Verfahren nach einem der vorhergehenden Ansprüche, **dadurch gekennzeichnet, dass** die von dem Steuergerät (9) ermittelten Werte zur Bestimmung des Wirkungsgrades, insbesondere des NO2-Bildungswirkungsgrades, des Oxidationskatalysators (3) und/oder des Partikelfilters (4) und/oder eines Ammoniak-Sperrkatalysators (11) miteinander und/oder mit vorgegebenen Sollwerten verglichen werden.

5. Verfahren nach einem der vorhergehenden Ansprüche, **dadurch gekennzeichnet, dass** zu definierten Zeitpunkten, in denen eine Wirkungsgraderfassung erfolgen soll, und/oder bei definierten Betriebszuständen der Brennkraftmaschine (1) und/oder der Abgasreinigungseinrichtung (2), in denen eine Wirkungsgraderfassung erfolgen soll, die Reduktionsmittelzufuhr, insbesondere die Zufuhr einer an sich für den aktuellen Betriebszustand erforderlichen Zudosiermenge an Reduktionsmittel, für eine vorgegebene Zeitdauer, insbesondere für den Zeitraum der Wirkungsgraderfassung, zumindest reduziert wird, insbesondere vollkommen eingestellt wird, und/oder ein Reduktionsmittel-Speicher des Reduktionskatalysators (5), insbesondere ein Ammoniak-Speicher eines SCR-Katalysators als Reduktionskatalysator (5), entleert ist.

6. Verfahren nach einem der vorhergehenden Ansprüche, **dadurch gekennzeichnet, dass** eine Auswertung der Ist-Signalwerte der NOx-Sensoren (7, 8) bei einem stationären Betrieb der Brennkraftmaschine (1), insbesondere bei einer Standregeneration, durchgeführt wird.

7. Verfahren nach einem der vorhergehenden Ansprüche, **dadurch gekennzeichnet, dass** die Ist-Signalwerte der beiden NOx-Sensoren (7, 8) und/oder die auf Basis der Ist-Signalwerte der beiden NOx-Sensoren (7, 8) ermittelten NO- undNO2-Konzentrationen und/oder NO/NO2-Verhältnisse im Neuzustand der Abgasreinigungseinrichtung in dem elektronischen Steuergerät (9) als Sollwerte abgespeichert und mit den jeweils erfassten und/oder ermittelten Istwerten im Betrieb der Brennkraftmaschine (1) verglichen werden, wobei bei definierten Abweichungen der Istwerte von den gespeicherten Sollwerten Lernwerte adaptiert und/oder ein Hinweis- oder Fehlersignal generiert wird.

8. Verfahren nach einem der vorhergehenden Ansprüche, **dadurch gekennzeichnet, dass** die Sollwerte in dem elektronischen Steuergerät (9) als Kennfeld abgelegt werden.

9. Verfahren nach einem der vorhergehenden Ansprüche, **dadurch gekennzeichnet, dass** die Sollwerte der beiden NOx-Sensoren (7, 8) rechnerisch ermittelt werden.

10. Verfahren nach einem der vorhergehenden Ansprüche, **dadurch gekennzeichnet, dass** der Grad der Abweichung der Ist-Signalwerte von den Sollwerten erfasst und zur Charakterisierung des Alterungsgrades und/oder des Verschwefelungsgrades des Oxidationskatalysators (3) und/oder Partikelfilters (4) und/oder des Ammoniak-Sperrkatalysators (11) herangezogen wird.

11. Vorrichtung zur Ermittlung des Wirkungsgrades einer Abgasreinigungseinrichtung (2) einer Brennkraftmaschine, insbesondere einer Diesel-Brennkraftmaschine (1), wobei die Abgasreinigungseinrichtung (2) einen Oxidationskatalysator (3), einen Partikelfilter (4), einen Reduktionskatalysator (5), eine Dosiereinrichtung (10) zum Zuführen von Reduktionsmittel stromauf des Reduktionskatalysators (5), einen ersten, dem Oxidationskatalysator (3) vorgeschaltetem NOx-Sensor (7), einen zweiten, stromab eines Reduktionskatalysators (5) angeordneten NOx-Sensor (8) sowie ein elektronisches Steuergerät (9) wenigstens zum Steuern der Zuführmenge an Reduktionsmittel aufweist, **dadurch gekennzeichnet,**
**dass** das Steuergerät (9) eine Auswerteeinrichtung umfasst, mittels der lediglich auf der Basis der als NOx-Signalwerte ausgebildeten Ist-Signalwerte der beiden NOx-Sensoren (7, 8) die NO- und NO2-Konzentration und/oder das NO/NO2-Verhältnis des Abgasstroms im Bereich des zweiten NOx-Sensors (8) ermittelbar sind und die so ermittelten NO- und NO2-Konzentrationen und/oder das so ermittelte NO/NO2-Verhältnis zur Bestimmung eines Wirkungsgrades des Oxidationskatalysators (3) und/oder des Partikelfilters (4) mit vorgegebenen Sollwerten vergleichbar sind, wobei die NO2-Querempfindlichkeit des zweiten NOx-Sensors (8) zur Wirkungsgradbestimmung nutzbar ist.

12. Vorrichtung nach Anspruch 11, **dadurch gekennzeichnet, dass** der erste und zweite NOx-Sensor (7, 8) eine NO2-Querempfindlichkeit von etwa 75 bis 90% aufweist.

13. Kraftfahrzeug, insbesondere Nutzfahrzeug, mit einer Vorrichtung nach einem der vorhergehenden Ansprüche 11 oder 12.

## Claims

1. Method for determining the efficiency of an exhaust gas purification device (2) of an internal combustion engine, in particular of a diesel internal combustion engine (1), having a first NOx sensor (7), arranged ahead of an oxidation catalyst (3) and/or of a particulate filter (4), and a second NOx sensor (8), arranged downstream of a reduction catalyst (5), and having a device (10) for the metered supply of a reducing agent, wherein the signals from the two NOx sensors (7, 8) are fed to a control unit (9), by means of which at least one feed quantity of the reducing agent is specified, **characterized**
**in that**, to determine an efficiency of the oxidation catalyst (3) and/or of the particulate filter (4), the NO and NO2 concentration and/or the NO2/NO ratio of the exhaust gas flow at the measurement position of the second NOx sensor (8) are determined by the control unit (9) solely by means of the NOx signal values acquired by the two NOx sensors (7, 8), wherein the NO2 cross sensitivity of the second NOx sensor (8) is used for the efficiency determination.

2. Method according to Claim 1, **characterized in that** an ammonia slip catalyst (11) is arranged after the reduction catalyst (5), with the result that, to determine the efficiency, in particular the NO2 formation efficiency, the NO and NO2 concentration and/or the NO2/NO ratio of the exhaust gas flow in the measurement zone of the second NOx sensor (7) and/or downstream of the ammonia slip catalyst (11) is determined by the control unit (9) solely by means of the signal values acquired by the two NOx sensors (7, 8).

3. Method according to Claim 1 or 2, **characterized in that** the signal value of the first NOx sensor (7) delivers a first NOx signal value which, with reference also to the second NOx signal value acquired by the second NOx sensor (8), is used in the control unit (9) as a basis for calculating the NO and NO2 concentration and/or the NO/NO2 ratio of the exhaust gas flow in the region of the second NOx sensor (8) and/or downstream of the reduction catalyst (5) and/or downstream of an ammonia slip catalyst (11).

4. Method according to one of the preceding claims, **characterized in that** the values determined by the control unit (9) are compared with one another and/or with specified desired values in order to determine the efficiency, in particular the NO2 formation efficiency, of the oxidation catalyst (3) and/or of the particulate filter (4) and/or of an ammonia slip catalyst (11).

5. Method according to one of the preceding claims, **characterized in that**, at defined times and/or in defined operating states of the internal combustion engine (1) and/or of the exhaust gas purification device (2), at or in which efficiency determination is to take place, the reducing agent supply, in particular the supply of a metered quantity of reducing agent required per se for the current operating state, is at least reduced, in particular completely shut off for a specified period of time, in particular for the duration of efficiency determination, and/or a reducing agent store of the reduction catalyst (5), in particular an ammonia store of an SCR catalyst as a reduction catalyst (5), is emptied.

6. Method according to one of the preceding claims, **characterized in that** evaluation of the actual signal values of the NOx sensors (7, 8) is carried out during steady-state operation of the internal combustion engine (1), in particular during stationary regeneration.

7. Method according to one of the preceding claims, **characterized in that** the actual signal values of the two NOx sensors (7, 8) and/or the NO and NO2 concentrations and/or NO/NO2 ratios determined on the basis of the actual signal values of the two NOx sensors (7, 8) are stored as desired values in the electronic control unit (9) in the new state of the exhaust gas purification device and are compared with the respectively acquired and/or determined actual values during the operation of the internal combustion engine (1), wherein learning values are adapted and/or an indication or fault signal is generated in the case of defined deviations of the actual values from the stored desired values.

8. Method according to one of the preceding claims, **characterized in that** the desired values are stored as a characteristic map in the electronic control unit (9).

9. Method according to one of the preceding claims, **characterized in that** the desired values of the two NOx sensors (7, 8) are determined by calculation.

10. Method according to one of the preceding claims, **characterized in that** the degree of deviation of the actual signal values from the desired values is measured and used to characterize the degree of ageing and/or the degree of sulphur contamination of the oxidation catalyst (3) and/or particulate filter (4) and/or of the ammonia slip catalyst (11).

11. Apparatus for determining the efficiency of an exhaust gas purification device (2) of an internal combustion engine, in particular of a diesel internal combustion engine (1), wherein the exhaust gas purification device (2) has an oxidation catalyst (3), a particulate filter (4), a reduction catalyst (5), a metering device (10) for supplying reducing agent upstream of the reduction catalyst (5), a first NOx sensor (7), arranged ahead of the oxidation catalyst (3), a second NOx sensor (8), arranged downstream of a reduction catalyst (5), and an electronic control unit (9) at least for controlling the supplied quantity of reducing agent, **characterized**
**in that** the control unit (9) comprises an evaluation device, by means of which the NO and NO2 concentration and/or the NO/NO2 ratio of the exhaust gas flow in the region of the second NOx sensor (8) can be determined solely on the basis of the actual signal values, configured as NOx signal values, of the two NOx sensors (7, 8), and the NO and NO2 concentrations determined in this way and/or the NO/NO2 ratio determined in this way can be compared with specified desired values in order to determine an efficiency of the oxidation catalyst (3) and/or of the particulate filter (4), wherein the NO2 cross sensitivity of the second NOx sensor (8) can be used for the efficiency determination.

12. Apparatus according to Claim 11, **characterized in that** the first and second NOx sensors (7, 8) have an NO2 cross sensitivity of about 75 to 90%.

13. Motor vehicle, in particular commercial vehicle, having an apparatus according to either of preceding Claims 11 or 12.

## Revendications

1. Procédé pour déterminer le rendement d'un dispositif de purification des gaz d'échappement (2) d'un moteur à combustion interne, en particulier d'un moteur diesel (1), comportant un premier capteur de NOx (7) relié en amont d'un catalyseur d'oxydation (3) et/ou d'un filtre à particules (4) et un deuxième capteur de NOx (8) situé en aval d'un catalyseur de réduction (5), ainsi qu'un dispositif (10) destiné à introduire de manière dosée un agent réducteur, dans lequel les signaux des deux capteurs de NOx (7, 8) sont envoyés à un dispositif de commande (9) au moyen duquel au moins une quantité d'agent réducteur introduite est prédéterminée,
**caractérisé en ce que**, pour déterminer un rendement du catalyseur d'oxydation (3) et/ou du filtre à particules (4), les concentrations de NO et de NO2 et/ou le rapport NO2/NO du flux de gaz d'échappement à la position de mesure du deuxième capteur NOx (8) est déterminée par le dispositif de commande (9) uniquement sur la base des valeurs de signal de NOx détectées par les deux capteurs de NOx (7, 8), dans lequel la sensibilité transversale au NO2 du deuxième capteur de NOx (8) est utilisée pour déterminer le rendement.

2. Procédé selon la revendication 1, **caractérisé en ce qu'**un catalyseur de blocage de l'ammoniac (11) est raccordé en aval du catalyseur de réduction (5), de sorte que, pour déterminer le rendement, en particulier le rendement de formation de NO2, le dispositif de commande (9) détermine, uniquement sur la base des valeurs de signal détectées par les deux capteurs NOx (7, 8), la concentration de NO et de NO2 et/ou le rapport NO2/NO du flux de gaz d'échappement dans la région de mesure du deuxième capteur NOx (7) et/ou en aval du catalyseur de blocage de l'ammoniac (11).

3. Procédé selon la revendication 1 ou 2, **caractérisé en ce que** la valeur de signal du premier capteur de NOx (7) délivre une première valeur de signal de NOx qui, en utilisant en outre la deuxième valeur de signal de NOx détectée par le deuxième capteur de NOx (8) dans le dispositif de commande (9), est utilisée comme base pour le calcul de la concentration de NO et de NO2 et/ou du rapport NO/NO2 du flux de gaz d'échappement dans la région du deuxième capteur de NOx (8) et/ou en aval du catalyseur de réduction (5) et/ou en aval d'un catalyseur de blocage de l'ammoniac (11).

4. Procédé selon l'une des revendications précédentes, **caractérisé en ce que** les valeurs déterminées par le dispositif de commande (9) pour déterminer le rendement, en particulier le rendement de formation de NO2, du catalyseur d'oxydation (3) et/ou du filtre à particules (4) et/ou d'un catalyseur de blocage de l'ammoniac (11), sont comparées les unes aux autres et/ou à des valeurs de consigne prédéterminées.

5. Procédé selon l'une des revendications précédentes, **caractérisé en ce qu'**à des instants définis lors desquels une mesure de rendement doit avoir lieu et/ou dans des états de fonctionnement définis du moteur à combustion interne (1) et/ou du dispositif de purification des gaz d'échappement (2), dans lesquels une mesure de rendement doit avoir lieu, l'apport d'agent réducteur, en particulier l'apport d'une quantité de dosage d'agent réducteur nécessaire en soi pour l'état de fonctionnement actuel, est au moins réduit pendant une période de temps prédéterminée, en particulier pendant la période de temps de détection du rendement, et est en particulier entièrement réglé, et/ou un réservoir d'agent réducteur du catalyseur de réduction (5), en particulier un réservoir d'ammoniac d'un catalyseur SCR, en tant que catalyseur de réduction (5), est vidé.

6. Procédé selon l'une des revendications précédentes, **caractérisé en ce qu'**une évaluation des valeurs de signal réelles des capteurs de NOx (7, 8) est effectuée pendant un fonctionnement en régime stationnaire du moteur à combustion interne (1), en particulier pendant une régénération statique.

7. Procédé selon l'une des revendications précédentes, **caractérisé en ce que** les valeurs de signal réelles des deux capteurs de NOx (7, 8) et/ou les concentrations de NO et de NO2 et/ou les rapports NO/NO2 déterminés sur la base des valeurs de signal réelles des deux capteurs de NOx (7, 8) à l'état neuf du dispositif de purification des gaz d'échappement sont stockés dans le dispositif de commande électronique (9) en tant que valeurs de consigne et sont comparées aux valeurs réelles respectivement détectées et/ou déterminées pendant le fonctionnement du moteur à combustion interne (1), dans lequel, pour des écarts définis des valeurs réelles par rapport aux valeurs de consigne stockées, des valeurs d'apprentissage sont adaptées et/ou un signal d'indication ou d'erreur est généré.

8. Procédé selon l'une des revendications précédentes, **caractérisé en ce que** les valeurs de consigne sont stockées dans le dispositif de commande électronique (9) sous la forme d'un diagramme caractéristique

9. Procédé selon l'une des revendications précédentes, **caractérisé en ce que** les valeurs de consigne des deux capteurs de NOx (7, 8) sont déterminées par calcul.

10. Procédé selon l'une des revendications précédentes, **caractérisé en ce que** le degré d'écart des valeurs de signal réelles par rapport aux valeurs de consigne est détecté et est utilisé pour caractériser le degré de vieillissement et/ou le degré de sulfatation du catalyseur d'oxydation (3) et/ou du filtre à particules (4) et/ou du catalyseur de blocage de l'ammoniac (11).

11. Dispositif pour déterminer le rendement d'un dispositif de purification des gaz d'échappement (2) d'un moteur à combustion interne, en particulier d'un moteur diesel (1), dans lequel le dispositif de purification des gaz d'échappement (2) comporte un catalyseur d'oxydation (3), un filtre à particules (4), un catalyseur de réduction (5), un dispositif de dosage (10) destiné à délivrer un agent réducteur en amont du catalyseur de réduction (5), un premier capteur de NOx (7) relié en amont du catalyseur d'oxydation (3), un deuxième capteur de NOx (8) situé en aval d'un catalyseur de réduction (5), ainsi qu'un dispositif de commande électronique (9) au moins destiné à commander la quantité d'agent réducteur introduit,
**caractérisé en ce que** le dispositif de commande (9) comprend un dispositif d'évaluation au moyen duquel, sur la base des valeurs de signal réelles des deux capteurs de NOx (7, 8), les concentrations de NO et de NO2 et/ou le rapport NO/NO2 du flux de gaz d'échappement dans la région du deuxième capteur de NOx (8) peuvent être déterminés et les concentrations de NO et de NO2 ainsi déterminées et/ou le rapport NO/NO2 ainsi déterminé peut ou peuvent être comparés à des valeurs de consigne prédéterminées pour déterminer un rendement du catalyseur d'oxydation (3) et/ou du filtre à particules (4), dans lequel la sensibilité transversale au NO2 du deuxième capteur de NOx (8) peut être utilisée pour déterminer le rendement.

12. Dispositif selon la revendication 11, **caractérisé en ce que** les premier et deuxième capteurs au NO2 (7, 8) ont une sensibilité transversale d'environ 75 à 90%.

13. Véhicule à moteur, en particulier véhicule utilitaire, comportant un dispositif selon l'une des revendications 11 ou 12 précédentes.
